# EUROPEAN PATENT SPECIFICATION

(11) **EP 3 909 788 B1**
(45) Date of publication and mention of the grant of the patent: **21.02.2024**
(21) Application number: 21167833.9
(22) Date of filing: 12.04.2021
(51) Int. Cl.: B60C 11/03, B60C 11/11, B60C 11/13

(54) **TIRE FOR MOTORCYCLE FOR RUNNING ON ROUGH TERRAIN**
REIFEN FÜR MOTORRAD ZUM FAHREN IN UNEBENEM GELÄNDE
PNEU DE MOTOCYCLETTE POUR TERRAINS ACCIDENTÉS

(30) Priority: 12.05.2020 JP 2020084014
(43) Date of publication of application: 17.11.2021
(73) Proprietor: Sumitomo Rubber Industries, Ltd., Kobe-shi, Hyogo 651-0072 (JP)
(72) Inventor: HINAMI, Yukiko, Kobe-shi, Hyogo-ken, Hyogo 651-0072 (JP)
(74) Representative: Manitz Finsterwald Patent- und Rechtsanwaltspartnerschaft mbB

(56) References cited:
- EP-A1- 3 375 632
- JP-A- 2020 111 262
- US-A1- 2005 139 301
- US-B2- 8 950 452

## Description

### BACKGROUND OF THE INVENTION

### Field of the Invention

The present invention relates to a tire for a motorcycle for running on rough terrain.

### Description of the Background Art

Japanese Laid-Open Patent Publication No. 2016-060347 proposes a pneumatic tire for a motorcycle for running on rough terrain, in which projections are provided on crown blocks. The projections project from block main bodies of the crown blocks toward the heel side in the rotation direction of the tire. The projections increase edge components in the tire circumferential direction. In addition, the projections support the crown blocks on the heel side, suppress excessive falling of the crown blocks in the tire circumferential direction, and provide great traction.
US 2005/0139301 A1 discloses a motorcycle tire comprising the features according to the preamble of claim 1.
EP 3 375 632 A1 discloses a motorcycle tire comprising features according to related technology, wherein a finned block includes a single fin portion only and projections are provided adjacent to the fin portion.

In recent years, due to improvement of vehicle performance, further improvement of traction performance and cornering performance has been desired. As a result of various studies on this point, the present inventors have found that traction performance and cornering performance can be further improved by improving finned blocks and peripheral portions thereof, and have completed the present invention.

The present invention has been made in view of the above circumstances, and a main object of the present invention is to improve combined performance of traction performance and cornering performance in a tire for a motorcycle for running on rough terrain.

### SUMMARY OF THE INVENTION

This object is satisfied by a tire comprising the features of claims 1. The present invention is directed to a tire for a motorcycle for running on rough terrain, including a tread portion having a designated rotation direction of the tire, wherein the tread portion includes a base surface and a plurality of blocks raised outward in a tire radial direction from the base surface, at least one of the plurality of blocks includes a finned block, the finned block includes a block main body and at least two fin portions having a smaller width in a tire axial direction than the block main body and extending to one side in a tire circumferential direction, and a projection is provided between two fin portions of the at least two fin portions on the base surface.

In the tire for a motorcycle for running on rough terrain according to the present invention, the blocks include a crown block on a tire equator side and a middle block adjacent to the crown block in the tire axial direction, and each of the crown block and the middle block is formed as the finned block.

In the tire for a motorcycle for running on rough terrain according to the present invention, a length in the tire circumferential direction of the projection is preferably larger than a length in the tire axial direction of the projection.

In the tire for a motorcycle for running on rough terrain according to the present invention, a length in the tire axial direction of the finned block is preferably larger than a length in the tire circumferential direction of the finned block.

In the tire for a motorcycle for running on rough terrain according to the present invention, a distance in the tire circumferential direction from the block main body to the projection is preferably smaller than the length in the tire circumferential direction of the finned block.

In the tire for a motorcycle for running on rough terrain according to the present invention, the projection preferably overlaps at least one of the fin portions in the tire circumferential direction.

In the tire for a motorcycle for running on rough terrain according to the present invention, the projection is preferably provided so as not to overlap a region obtained by extending each of the two fin portions so as to be parallel to the tire circumferential direction.

In the tire for a motorcycle for running on rough terrain according to the present invention, preferably, the finned block includes a first side surface facing another side in the tire circumferential direction, and the first side surface is connected to the base surface via a curved surface.

In the tire for a motorcycle for running on rough terrain according to the present invention, a maximum height of the curved surface from the base surface is preferably smaller than a maximum height of each fin portion from the base surface.

In the tire for a motorcycle for running on rough terrain according to the present invention, a protrusion is preferably provided on a tread surface of the finned block so as to protrude in a block height direction.

In the tire for a motorcycle for running on rough terrain according to the present invention, the protrusion is preferably surrounded by a recess that is recessed from the tread surface.

In the tire for a motorcycle for running on rough terrain according to the present invention, a chamfered portion is preferably provided at an edge of the tread surface of the finned block.

In the tire for a motorcycle for running on rough terrain according to the present invention, an inner edge on the base surface side of the chamfered portion is preferably located on the base surface side of an outer surface of the fin portion.

In the tire for a motorcycle for running on rough terrain according to the present invention, preferably, the chamfered portion is connected to a side surface on a toe side in the rotation direction.

In the tire for a motorcycle for running on rough terrain according to the present invention, preferably, the tread portion has a designated rotation direction of the tire, and a centroid of a tread surface of the middle block is located on a toe side in the rotation direction of a centroid of a tread surface of the crown block.

The tire for a motorcycle for running on rough terrain according to the present invention can improve combined performance of traction performance and cornering performance since the above configuration is adopted in the tire.

### BRIEF DESCRIPTION OF THE DRAWINGS

FIG. 1 is a transverse cross-sectional view showing an embodiment of the tire for a motorcycle for running on rough terrain according to the present invention;
FIG. 2 is a development showing a tread pattern of a tread portion in FIG. 1;
FIG. 3 is an enlarged perspective view of a finned block in FIG. 2;
FIG. 4 is an enlarged plan view of a crown block and middle blocks in FIG. 2;
FIG. 5 is a cross-sectional view taken along a line B-B in FIG. 4;
FIG. 6 is an enlarged plan view of a finned block of another embodiment of the present invention;
FIG. 7 is a cross-sectional view taken along a line C-C in FIG. 6;
FIG. 8 is an enlarged plan view of a finned block of still another embodiment of the present invention;
FIG. 9 is a cross-sectional view taken along a line D-D in FIG. 8;
FIG. 10 is a development of a tread portion of a reference tire; and
FIG. 11 is a development of a tread portion of a tire for a motorcycle for running on rough terrain according to a comparative example.

### DESCRIPTION OF THE PREFERRED EMBODIMENTS

Hereinafter, embodiments of the present invention will be described with reference to the drawings.

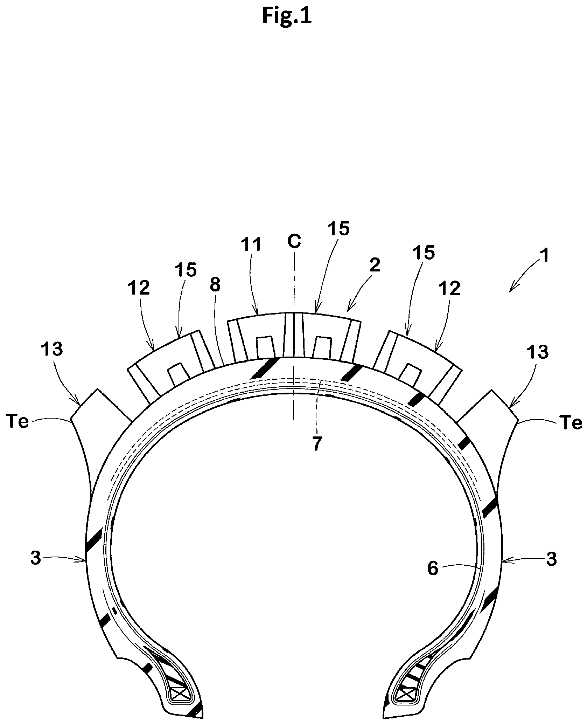

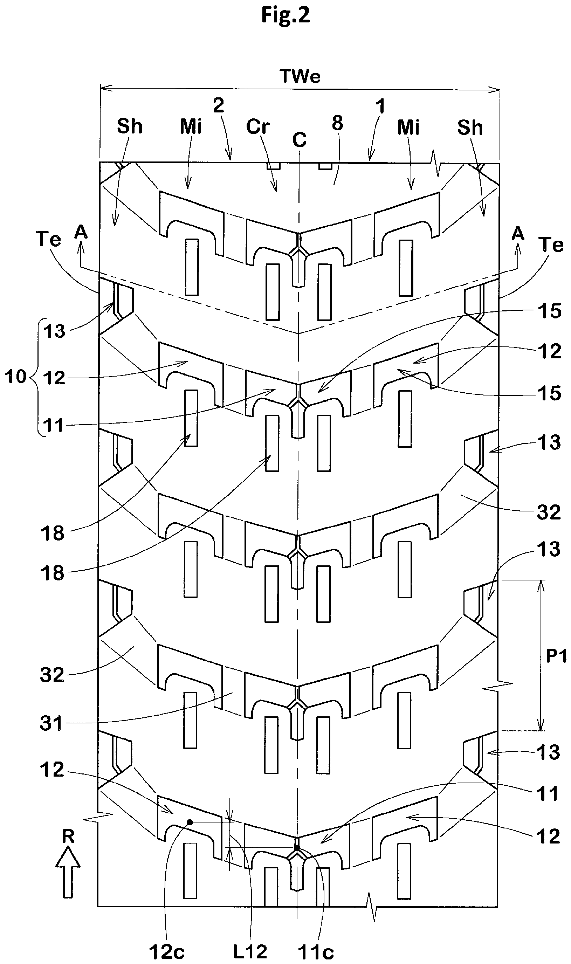

FIG. 1 shows a transverse cross-sectional view of a tire for a motorcycle for running on rough terrain (hereinafter, sometimes referred to simply as "tire") 1 according to an embodiment of the present invention in a normal state. FIG. 2 is a development showing a tread pattern of a tread portion 2 of the tire 1. FIG. 1 is a cross-sectional view taken along a line A-A in FIG. 2 and is a meridional cross-sectional view including a tire rotation axis.

In the case of a tire for which various standards are defined, the "normal state" is a state where the tire is fitted on a normal rim and inflated to a normal internal pressure and no load is applied to the tire. In the case of a tire for which various standards are not defined, the normal state means a standard use state, corresponding to the purpose of use of the tire, where no load is applied to the tire. In the present description, unless otherwise specified, dimensions and the like of components of the tire are values measured in the normal state. In addition, if there is a slight difference in dimensions and the like of components of the tire depending on the measurement position, unless otherwise specified, each dimension shown in the present description means the median value between the minimum and maximum values. Moreover, each configuration described in the present description tolerates the usual errors contained in a rubber molded product.

The "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

As shown in FIG. 1, the tire 1 according to the present invention is suitably used, for example, as a tire for motocross racing. The tire according to the present embodiment is suitably used, for example, as a tire for the rear wheel of a motocross vehicle. However, the tire according to the present embodiment is not limited such a mode. In the transverse crosssection, the outer surface of the tread portion 2 of the tire 1 according to the present embodiment is curved in an arc shape that is convex outward in the tire radial direction.

The tire 1 according to the present embodiment includes, for example, a carcass 6 and a tread reinforcing layer 7. For these components, a known configuration is adopted as appropriate.

As shown in FIG. 2, the tread portion 2 has, for example, a directional pattern having a designated rotation direction R. The rotation direction R is indicated, for example, on each sidewall portion 3 (shown in FIG. 1) by characters or symbols. However, the present invention is not limited to such a mode. In some drawings of the present specification, the rotation direction R is indicated by an arrow.

The tread portion 2 is divided, for example, into a crown region Cr, middle regions Mi, and shoulder regions Sh.

The crown region Cr is a region centered at a tire equator C and having a width that is 1/3 of a tread development width TWe. Each shoulder region Sh is a region having a width that is 1/6 of the tread development width TWe, on the tire equator C side from a tread end Te. Each middle region Mi is a region between the crown region Cr and the shoulder region Sh.

The tread development width TWe is the distance in the tire axial direction between the tread ends Te, Te when the tread portion 2 is developed on a plane. Each tread end Te means the outer edge in the tire axial direction of each block included in a block row located on the outermost side in the tire axial direction among blocks provided to the tread portion 2.

The tread portion 2 includes a base surface 8 and a plurality of blocks 10 raised outward in the tire radial direction from the base surface 8. The blocks 10 of the present embodiment include a plurality of crown blocks 11, a plurality of middle blocks 12, and a plurality of shoulder blocks 13. The centroid of the tread surface of each crown block 11 is located within the crown region Cr. In a preferred embodiment, each crown block 11 is provided on the tire equator C. The centroid of the tread surface of each middle block 12 is located within the middle region Mi. In addition, each middle block 12 is adjacent to the crown block 11. The centroid of the tread surface of each shoulder block 13 is located within the shoulder region Sh. In addition, each shoulder block 13 is adjacent to the middle block 12.

The width in the tire axial direction of each crown block 11 is, for example, 20% to 40% of the tread development width TWe. The width in the tire axial direction of each middle block 12 is, for example, 10% to 20% of the tread development width TWe. The width in the tire axial direction of each shoulder block 13 is, for example, 8% to 15% of the tread development width TWe. The length in the tire circumferential direction of each block is, for example, 10% to 30% of one pitch length P1 of the blocks 10. However, the present invention is not limited to such a mode.

At least one of the plurality of blocks 10 includes a finned block 15. In the present embodiment, the crown blocks 11 and the middle blocks 12 are each formed as the finned block 15.

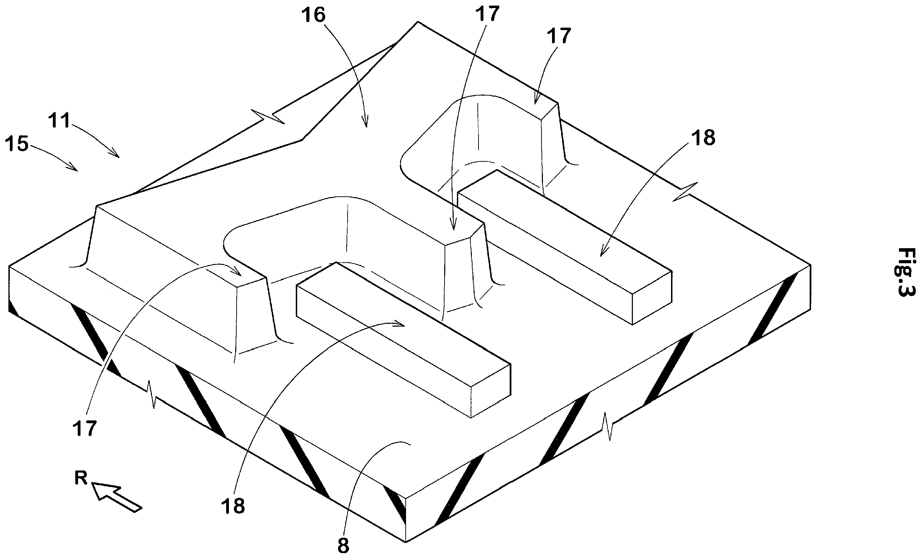

FIG. 3 shows an enlarged perspective view of the finned block 15. The finned block 15 shown in FIG. 3 corresponds to each crown block 11 of the present embodiment.

As shown in FIG. 3, the finned block 15 includes a block main body 16 and at least two fin portions 17 having a smaller width in the tire axial direction than the block main body 16 and extending in the tire circumferential direction.

In the present invention, a projection 18 is provided between two fin portions 17 on the base surface 8. The tire 1 according to the present invention can improve combined performance of traction performance and cornering performance since the above configuration is adopted in the tire 1. As for the reason for this, the following mechanism is inferred.

In the tire 1 according to the present invention, falling in the tire circumferential direction of each block is suppressed by the fin portions 17. Therefore, traction performance is improved. In addition, the fin portions 17 include edges extending in the tire circumferential direction, thus providing frictional force in the tire axial direction, and also serving to improve cornering performance.

The inventors have found the following technical matters through various experiments. Specifically, it has been found that, when the finned block 15 exerts reaction force in the tire circumferential direction during traction, the base surface 8 tends to be deformed so as to buckle around the fin portion 17. In addition, it has been found that, when this deformation is suppressed, the finned block 15 can exert greater reaction force in the tire circumferential direction, resulting in further improvement of traction performance.

In the present invention, since the projection 18 is provided between two fin portions 17 on the base surface 8, the above deformation of the base surface 8 is suppressed, so that traction performance is further improved. In addition, the projection 18 provides an edge component in the tire circumferential direction, and also improves cornering performance. Owing to these actions, the tire 1 according to the present invention can improve combined performance of traction performance and cornering performance.

In order to improve the above-described effect, each fin portion 17 is preferably provided on the heel side in the rotation direction R (hereinafter, sometimes referred to simply as "heel side") of the block main body 16. Accordingly, deformation of the finned block 15 to the heel side is reliably suppressed. However, the present invention is not limited to such a mode, and each fin portion 17 may be provided on the toe side in the rotation direction R (hereinafter, sometimes referred to simply as "toe side") of the block main body 16. In such a mode as well, deformation in the tire circumferential direction of the finned block 15 is suppressed, so that traction performance can be improved.

Hereinafter, more detailed configurations of the present embodiment will be described. The configurations described below show a specific mode of the present embodiment rather than the essential elements of the present invention. Therefore, it is needless to say that the present invention can achieve the above-described effect even when the configurations described below are not provided. In addition, even when any one of the configurations described below is independently applied to the tire according to the present invention having the above-described characteristics, performance improvement corresponding to each configuration can be expected. Furthermore, even when some of the configurations described below are applied in combination, performance improvement corresponding to each configuration can be expected.

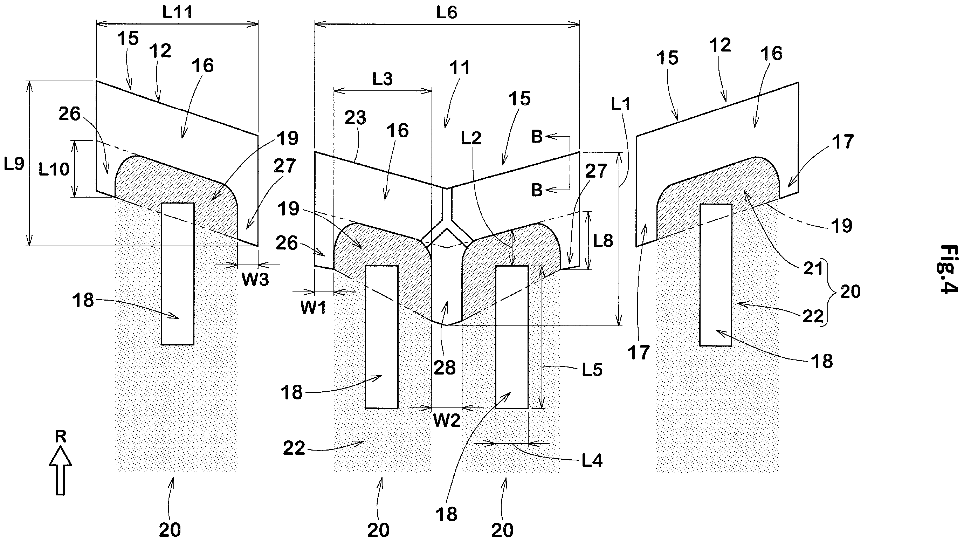

FIG. 4 is an enlarged plan view of the crown blocks 11 and the middle blocks 12 formed as the finned blocks 15, and projections adjacent to these blocks. As shown in FIG. 4, the above-described phrase "a projection 18 is provided between two fin portions 17 on the base surface 8" includes a mode in which a projection 18 is disposed within each block adjacent region 20 shown so as to be colored in FIG. 4. The block adjacent region 20 includes a gap portion 21 between the two fin portions 17, and an extension portion 22 extending from the gap portion 21 toward the heel side so as to be parallel to the tire circumferential direction. For ease of understanding, in FIG. 4, the gap portion 21 and the extension portion 22 are colored. Moreover, in FIG. 4, a boundary 19 between the gap portion 21 and the extension portion 22 is shown by a two-dot chain line. The block adjacent region 20 extends to a block (not shown) adjacent on the heel side of the finned block 15.

When at least a part of the projection 18 is disposed within the block adjacent region 20, the above-described effect can be expected. In a more preferable mode, the entirety of the projection 18 is disposed within the block adjacent region 20. In other words, the projection 18 is provided so as not to overlap a region obtained by extending each of the two fin portions 17 so as to be parallel to the tire circumferential direction. Accordingly, a portion having low stiffness is reinforced by the projection 18, so that traction performance is reliably improved.

A distance L2 in the tire circumferential direction from the block main body 16 of the finned block 15 to the projection 18 is, for example, preferably smaller than a length L1 in the tire circumferential direction of the finned block 15. In the case where the distance L2 is larger than the length L1, deformation in the tire circumferential direction of the block may be increased, and traction performance may be deteriorated as compared to the present embodiment. The distance L2 is, for example, 5% to 25% of the length L1. Accordingly, while exhibiting the above-described effect, clogging with mud between the finned block 15 and the projection 18 is suppressed.

In the present embodiment, since the distance L2 is specified and the projection 18 is provided so as not to overlap the region obtained by extending each fin portion 17 so as to be parallel to the tire circumferential direction, a synergistic effect that mud is prevented from being held around the finned block 15 and the projection 18 can be expected. Accordingly, the finned block 15 and the projection 18 are easily pressed into a road surface, so that great reaction force can be expected.

The projection 18 preferably overlaps at least one of the fin portions 17 in the tire circumferential direction. This configuration means a mode in which a virtual region obtained by extending at least one of the fin portions 17 so as to be parallel to the tire axial direction overlaps the projection 18. In other words, at least a part of the projection 18 is located within the gap portion 21. Accordingly, as compared to a mode in which the above-configuration is not employed, deformation of the base surface 8 is reliably inhibited, and traction performance is further improved. In addition, since the projection 18 and the fin portion 17 overlap each other in the tire circumferential direction, and the distance L2 is set within the above-described range, the effect of suppressing clogging with mud and the traction improving effect are achieved in a well-balanced manner.

A length L4 in the tire axial direction of the projection 18 is, for example, 20% to 60% of a distance L3 in the tire axial direction between the two fin portions 17. A length L5 in the tire circumferential direction of the projection 18 is, for example, 20% to 80% and preferably 30% to 50% of one pitch length P1 (shown in FIG. 2) in the tire circumferential direction of the finned blocks 15. However, the size of the projection 18 is not limited to such a mode.

The length L5 in the tire circumferential direction of the projection 18 is preferably larger than the length L4 in the tire axial direction of the projection 18. Accordingly, the stiffness in the tire circumferential direction of the projection 18 is increased, and the above-described effect is reliably achieved. The length L4 in the tire axial direction of the projection 18 is 20% to 30% of the length L5 in the tire circumferential direction of the projection 18. Such a projection 18 provides frictional force in the tire axial direction while suppressing deformation in the tire circumferential direction of the finned block 15, and improves traction performance and cornering performance in a well-balanced manner.

The height of the projection 18 is, for example, not greater than 70% and preferably 30% to 70% of the height of the finned block 15. Accordingly, mud can be prevented from adhering and being held around the projection 18.

In the present embodiment, a length L6 in the tire axial direction of the finned block 15 is larger than the length L1 in the tire circumferential direction of the finned block 15. Such a finned block 15 can exhibit excellent traction performance as compared to a block in which the length L6 is smaller than the length L1. Specifically, the length L1 in the tire circumferential direction of the finned block 15 is preferably 50% to 80% and more preferably 60% to 70% of the length L6 in the tire axial direction. Such a finned block 15 serves to enhance traction performance. In particular, in the present embodiment, since the above-described circumferentially long projection 18 is provided between the fin portions 17 of the above-described axially long finned block 15, combined performance of traction performance and cornering performance is further improved.

The crown blocks 11 are each formed as a finned block 15 including three fin portions 17. The three fin portions 17 include a first fin portion 26 on one side in the tire axial direction, a second fin portion 27 on the other side in the tire axial direction, and a third fin portion 28 between the first fin portion 26 and the second fin portion 27. In addition, one projection 18 is disposed in each of the block adjacent region 20 between the first fin portion 26 and the third fin portion 28 and the block adjacent region 20 between the second fin portion 27 and the third fin portion 28. Accordingly, falling in the tire circumferential direction of the crown block 11 is reliably suppressed, so that traction performance is improved.

The first fin portion 26 is connected to the side surface on the one side in the tire axial direction of the block main body 16. The second fin portion 27 is connected to the side surface on the other side in the tire axial direction of the block main body 16. The first fin portion 26 and the second fin portion 27 are formed in substantially the same shape.

The third fin portion 28 is connected to a center portion in the tire axial direction of the block main body 16. In the present embodiment, each crown block 11 is disposed on the tire equator C, and the third fin portion 28 included in the crown block 11 is disposed on the tire equator C. In a further preferable mode, the centroid of the tread surface of this block is located within a region obtained by extending the third fin portion 28 toward the toe side so as to be parallel to the tire circumferential direction. Accordingly, the third fin portion 28 effectively suppresses falling of the block main body 16, so that excellent traction performance is exhibited.

In order to reliably exhibit the above-described effect, the length in the tire circumferential direction of the third fin portion 28 is, for example, larger than each of the lengths in the tire circumferential direction of the first fin portion 26 and the second fin portion 27. In addition, the third fin portion 28 protrudes to the heel side more than the first fin portion 26 and the second fin portion 27.

A width W2 in the tire axial direction of the third fin portion 28 is, for example, larger than each of the widths in the tire axial direction of the first fin portion 26 and the second fin portion 27. Specifically, the width W2 of the third fin portion 28 is, for example, 130% to 200% of a width W1 of the first fin portion 26. Accordingly, the third fin portion 28 suppresses falling of the block main body 16, and the first fin portion 26 and the second fin portion 27 become appropriately deformed, whereby mud and dirt can be prevented from being held around the finned block 15.

A maximum length L8 in the tire circumferential direction of each fin portion 17 of the crown block 11 is, for example, 60% to 150% and preferably 80% to 135% of the length in the tire circumferential direction of the crown block 11. The boundary between each fin portion 17 and the block main body 16 is a virtual surface obtained by extending a surface between two fin portions 17 of a second side surface 24, facing the heel side, of the block main body 16, along a first side surface 23 facing the toe side of the block main body 16.

The width in the tire axial direction of each fin portion 17 of the crown block 11 is, for example, 5% to 20% and preferably 5% to 15% of the length in the tire axial direction of the crown block 11.

The first side surface 23, facing the toe side, of the crown block 11 is, for example, recessed toward the heel side. The first side surface 23 of the present embodiment is formed, for example, by connecting two flat surfaces inclined in opposite directions relative to the tire axial direction, via a ridge line. Each of the angles of the flat surfaces relative to the tire axial direction is, for example, 5 to 30°. Such a first side surface 23 exerts great reaction force when pushing away mud and dirt during running on rough terrain.

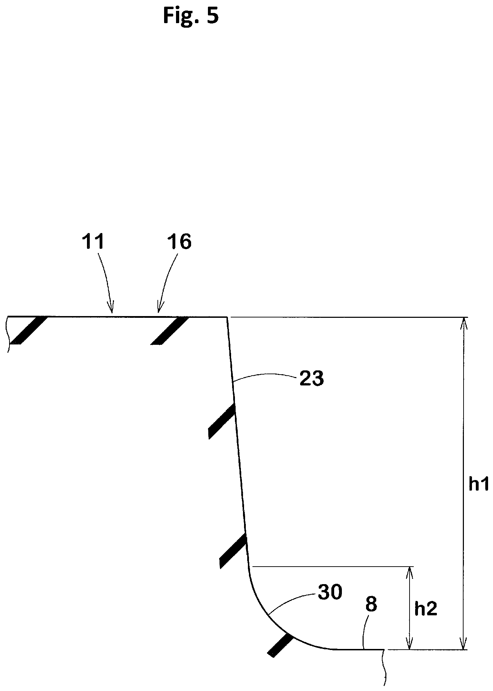

FIG. 5 shows a cross-sectional view of the crown block 11 taken along a line B-B in FIG. 4. As shown in FIG. 5, the first side surface 23 is connected to the base surface 8 via a curved surface 30. The curved surface 30 is a surface having a center outside the block and curved in an arc shape. A maximum height h2 of the curved surface 30 from the base surface 8 is smaller than the height of the block main body 16 or each fin portion 17 from the base surface 8. In the present embodiment, each fin portion 17 and the block main body 16 have the same height. The maximum height h2 of the curved surface 30 is, for example, 20% to 50% of a height h1 of the block main body 16. Such a curved surface 30 makes the crown block 11 hard to fall and serves to enhance traction performance.

In the present embodiment, owing to the synergistic effect of the curved surface 30 and the above-described projections 18, deformation of the crown block 11 to both sides in the tire circumferential direction is suppressed, and steering stability during traction and during braking is improved. In particular, since the shape of each projection 18 is made circumferentially long as described above, the steering stability can be further improved.

As shown in FIG. 4, each middle block 12 is formed as a finned block 15 including two fin portions 17. The two fin portions 17 include a first fin portion 26 on one side in the tire axial direction and a second fin portion 27 on the other side in the tire axial direction. In addition, one projection 18 is disposed in the block adjacent region 20 between the first fin portion 26 and the second fin portion 27 of the middle block 12.

Each of the lengths in the tire circumferential direction of the first fin portion 26 and the second fin portion 27 of the middle block 12 is smaller than the length in the tire circumferential direction of the third fin portion 28 of the crown block 11. Each of the lengths in the tire circumferential direction of the first fin portion 26 and the second fin portion 27 of the middle block 12 is equal to each of the lengths in the tire circumferential direction of the first fin portion 26 and the second fin portion 27 of the crown block 11. Accordingly, the change in traction during straight running and during cornering becomes linear.

A maximum length L10 in the tire circumferential direction of each fin portion 17 of the middle block 12 is, for example, 60% to 130% and preferably 80% to 115% of a length L9 in the tire circumferential direction of the middle block 12. In addition, a width W3 in the tire axial direction of each fin portion 17 of the middle block 12 is, for example, 5% to 20% and preferably 5% to 15% of a length L11 in the tire axial direction of the middle block 12.

The side surface, facing the toe side in the rotation direction R, of the middle block 12 is, for example, inclined to the toe side from the tire equator C side toward the tread end Te side. The angle of the side surface relative to the tire axial direction is, for example, 5 to 30°. In addition, as shown in FIG. 2, a centroid 12c of the tread surface of the middle block 12 is located on the toe side of a centroid 11c of the tread surface of the crown block 11. A distance L12 in the tire circumferential direction from the centroid 12c of the middle block 12 to the centroid 11c of the crown block 11 is, for example, 10% to 30% of one pitch length P1 of the blocks. Accordingly, the middle block 12 guides mud and dirt pushed away to the tire equator C side, to the crown block 11 side, and the mud and the dirt are further pushed away by the crown block 11. Therefore, traction performance is further improved.

As shown in FIG. 4, the length L11 in the tire axial direction of the middle block 12 is preferably smaller than the length in the tire axial direction of the crown block 11. Specifically, the length L11 of the middle block 12 is 50% to 80% of the length of the crown block 11.

As shown in FIG. 2, each shoulder block 13 of the present embodiment is formed, for example, as a finless block that does not include any fin portion 17 described above. The tread surface of the shoulder block 13 has, for example, a rectangular shape, and preferably a trapezoidal shape. The tread surface of each shoulder block 13 of the present embodiment includes two edges extending so as to be parallel to the tire circumferential direction. The length in the tire circumferential direction of the shoulder block 13 increases toward the tread end Te side. The stiffness of such a shoulder block 13 increases toward the tread end Te, and thus the response when increasing the camber angle of a vehicle body can be linear.

The tread portion 2 includes, for example, crown tie bars 31 and shoulder tie bars 32. Each crown tie bar 31 is raised from the base surface 8 and connects the crown block 11 and the middle block 12. Each shoulder tie bar 32 is raised from the base surface 8 and connects the shoulder block 13 and the middle block 12. In the present embodiment, the blocks connected by the respective tie bars are integrated to improve traction performance.

Hereinafter, other embodiments of the present invention will be described. In drawings showing the other embodiments, the elements already described are designated by the same reference characters as those described above, and the above-described configurations can be applied thereto.

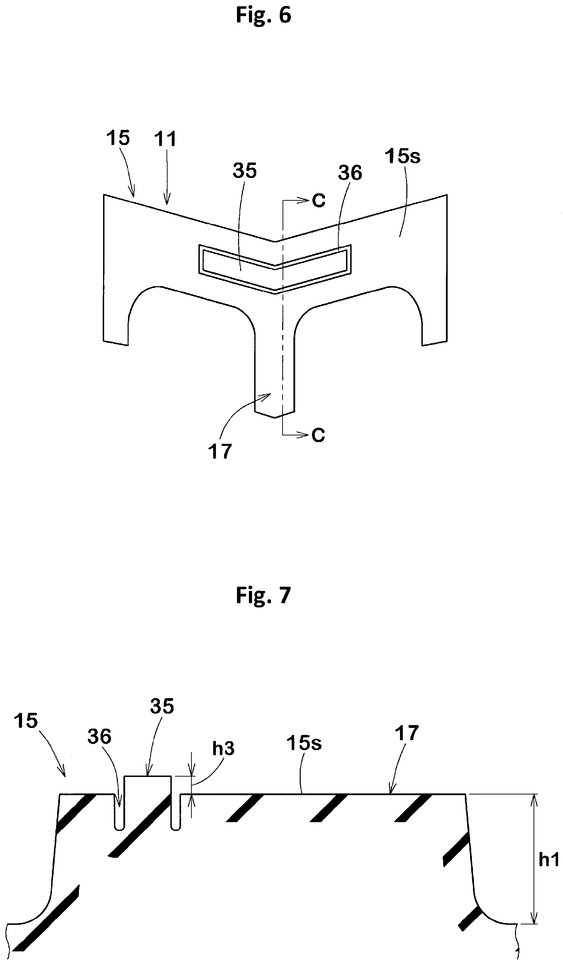

FIG. 6 shows an enlarged plan view of a finned block 15 of another embodiment of the present invention. FIG. 7 shows a cross-sectional view taken along a line C-C in FIG. 6. The finned block 15 shown in FIG. 6 and FIG. 7 is applied, for example, to each crown block 11 in the tread pattern shown in FIG. 2.

As shown in FIG. 6 and FIG. 7, a protrusion 35 is provided on a tread surface 15s of the finned block 15 of this embodiment so as to protrude in the block height direction. A protrusion height h3 of the protrusion 35 from the tread surface 15s is 5% to 25% of the height h1 of the block main body 16. In addition, the protrusion 35 is, for example, surrounded by a recess 36 that is recessed from the tread surface 15s. Such a protrusion 35 can provide great reaction force in the tire circumferential direction and the tire axial direction by sticking to a road surface, and can prevent mud and dirt from adhering and being held around the block.

The protrusion 35, in combination with the fin portions 17 and the projections 18 described above, further enhances traction performance and cornering performance. In addition, by deformation of the protrusion 35, mud can be prevented from being held around the fin portions 17 and the projections 18.

Moreover, when the protrusion 35 is provided to the axially long finned block 15 as in the present embodiment, a synergistic effect that steering stability during traction and during braking is improved can be expected.

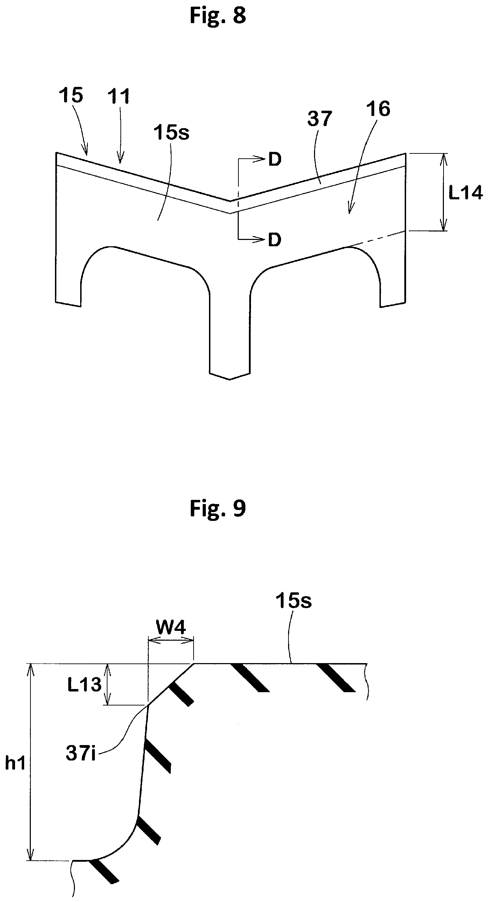

FIG. 8 shows an enlarged plan view of a finned block 15 of still another embodiment of the present invention. FIG. 9 shows a cross-sectional view taken along a line D-D in FIG. 8. The finned block 15 shown in FIG. 8 and FIG. 9 is applied, for example, to each crown block 11 in the tread pattern shown in FIG. 2.

As shown in FIG. 8 and FIG. 9, a chamfered portion 37 is provided at the edge of the tread surface 15s of the finned block 15. The chamfered portion 37 includes an inclined surface connected to the tread surface 15s and a side surface. In a more preferable mode, the chamfered portion 37 is connected to a side surface on the toe side. Such a chamfered portion 37 can disperse the reaction force received by the block from a road surface, and further can prevent an excessive load from acting on the block.

An inner edge 37i on the base surface 8 side of the chamfered portion 37 is preferably located on the base surface 8 side of the outer surface of the fin portion 17. A length L13 in the block height direction of the chamfered portion 37 is 5% to 50% of the height h1 of the block main body 16. A width W4, in a direction along the block tread surface, of the chamfered portion 37 is 5% to 50% of a length L14 in the tire circumferential direction of the block main body 16. Such a chamfered portion 37 can enhance the durability of the block while maintaining traction performance.

The chamfered portion 37 can further improve the durability of the finned block 15 by being combined with the axially long finned block 15 and the circumferentially long projections 18 described above. In addition, the durability of the finned block 15 and traction performance can be achieved at a higher level by combining the chamfered portion 37 with the protrusion 35 shown in FIG. 6 and FIG. 7.

Although the preferred embodiments of the tire for a motorcycle for running on rough terrain according to the present invention have been described in detail above, the present invention is not limited to the above specific embodiments, and various modifications can be made to implement the present invention within the scope of the appended claims.

### EXAMPLES

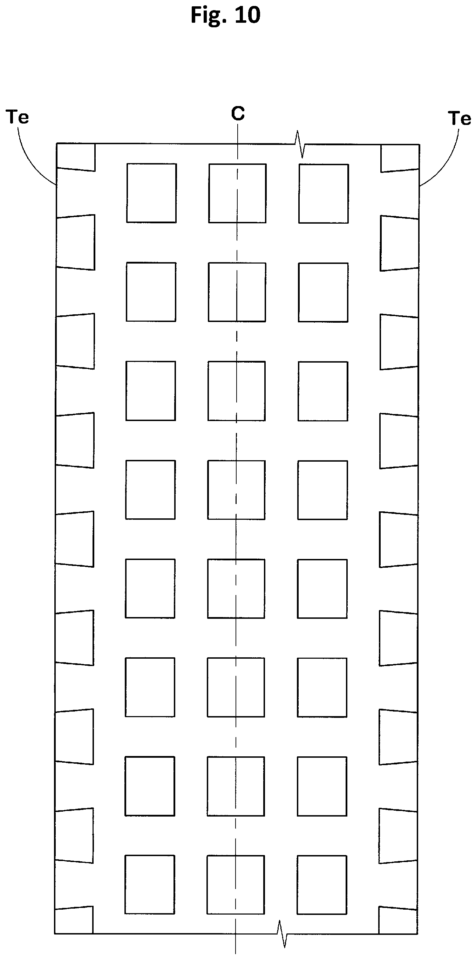

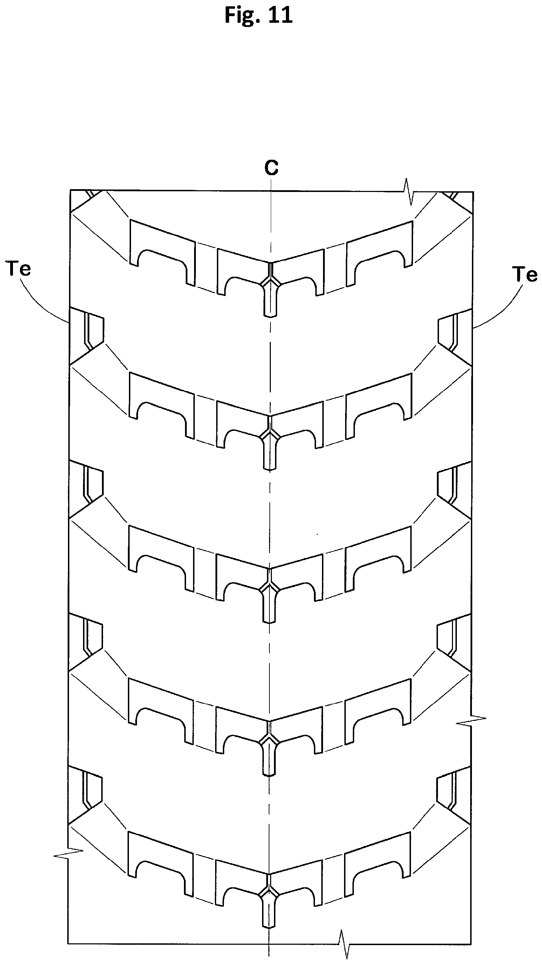

Rear wheel tires for a motorcycle for running on rough terrain having the basic structure in FIG. 2 were produced as test tires on the basis of specifications in Table 1. In addition, a tire having the tread portion shown in FIG. 10 was produced as a rear wheel tire for a motorcycle for running on rough terrain (reference tire), which serves as a reference for performance comparison. A plurality of blocks each having a rectangular tread surface are provided to the tread portion of the reference tire. As a comparative example, a tire in which, as shown in FIG. 11, no projection is provided was produced. The tire of the comparative example has substantially the same tread pattern as the tread pattern shown in FIG. 2, except for the above-described matter. Each test tire was tested for traction performance and cornering performance. The common specifications and the test methods for the respective test tires are as follows.
Vehicle used: a motocross racing vehicle having an engine displacement of 450 cc
Tire size: 120/80-19
Rim size: 2.15WM
Internal pressure: 80 kPa
The test methods are as follows.

### <Traction Performance>

The time when the above test vehicle ran on a 100 m straight road of rough terrain with full throttle acceleration was measured a plurality of times, and the average time was calculated. As for the result, the shortened time from the average time of the reference tire is shown as an index with the shortened time of the comparative example being regarded as 100. A higher value indicates that the shortened time is larger and that the traction performance is better.

### <Cornering Performance>

Two cones were provided on rough terrain so as to be spaced apart from each other by 50 m, and the time when five laps of running in a number-8 shape around these cones were made was measured a plurality of times, and the average time was calculated. As for the result, the shortened time from the average time of the reference tire is shown as an index with the shortened time of the comparative example being regarded as 100. A higher value indicates that the shortened time is larger and that the cornering performance is better.

### <Combined Performance>

The total score of the traction performance score and the cornering performance score indicates combined performance of traction performance and cornering performance in each test tire.

The results of the tests are shown in Table 1.

**[Table 1]**

| | Comparative Example | Example 1 | Example 2 | Example 3 | Example 4 | Example 5 | Example 6 | Example 7 | Example 8 | Example 9 |
|---|---|---|---|---|---|---|---|---|---|---|
| Drawing showing tread pattern | FIG. 11 | FIG. 2 | FIG. 2 | FIG. 2 | FIG. 2 | FIG. 2 | FIG. 2 | FIG. 2 | FIG. 2 | FIG. 2 |
| Length L4 in tire axial direction of projection / distance L3 between fin portions (%) | - | 38 | 20 | 30 | 50 | 60 | 38 | 38 | 38 | 38 |
| Length L5 in tire circumferential direction of projection / one pitch length P1 (%) | - | 33 | 33 | 33 | 33 | 33 | 20 | 30 | 40 | 50 |
| Traction performance (score) | 100 | 194 | 177 | 187 | 195 | 191 | 175 | 190 | 194 | 195 |
| Cornering performance (score) | 100 | 141 | 127 | 135 | 138 | 127 | 128 | 138 | 145 | 147 |
| Combined performance (total score) | 200 | 335 | 304 | 322 | 333 | 318 | 303 | 328 | 339 | 342 |

As shown in Table 1, it is confirmed that the tire of each Example has improved combined performance of traction performance and cornering performance.

The same tests as described above were carried out for Examples in which the length in the tire circumferential direction with respect to the length in the tire axial direction of the finned block (crown block) and the angles of the side surfaces on the toe side of the crown block and the middle block relative to the tire axial direction were changed.

The results of the tests are shown in Table 2.

**[Table 2]**

| | Comparative Example | Example 1 | Example 10 | Example 11 | Example 12 | Example 13 | Example 14 | Example 15 | Example 16 | Example 17 |
|---|---|---|---|---|---|---|---|---|---|---|
| Drawing showing tread pattern | FIG. 11 | FIG. 2 | FIG. 2 | FIG. 2 | FIG. 2 | FIG. 2 | FIG. 2 | FIG. 2 | FIG. 2 | FIG. 2 |
| Length El in tire circumferential direction / length L6 in tire axial direction of finned block (%) | 63 | 63 | 50 | 60 | 70 | 80 | 63 | 63 | 63 | 63 |
| Angles of side surfaces on toe side of Cr block and Mi block (°) | 15 | 15 | 15 | 15 | 15 | 15 | 5 | 10 | 20 | 25 |
| Traction performance (score) | 100 | 194 | 178 | 194 | 190 | 181 | 202 | 194 | 193 | 191 |
| Cornering performance (score) | 100 | 141 | 129 | 141 | 145 | 156 | 124 | 132 | 143 | 145 |
| Combined performance (total score) | 200 | 335 | 307 | 335 | 335 | 337 | 326 | 328 | 336 | 336 |

As shown in Table 2, it is confirmed that various dimensions of the crown block affect traction performance and cornering performance. In addition, it is confirmed that each Example shown in Table 2 has improved combined performance of traction performance and cornering performance. as compared to the comparative example.

The same tests as described above were carried out for Examples in which the height of the curved surface of the crown block was changed.

The results of the tests are shown in Table 3.

**[Table 3]**

| | Comparative Example | Example 1 | Example 18 | Example 19 | Example 20 | Example 21 |
|---|---|---|---|---|---|---|
| Drawing showing tread pattern | FIG. 11 | FIG. 2 | FIG. 2 | FIG. 2 | FIG. 2 | FIG. 2 |
| Maximum height h2 of curved surface / height h1 of block main body | 25 | 25 | 15 | 20 | 30 | 35 |
| Traction performance (score) | 100 | 194 | 178 | 189 | 188 | 177 |
| Cornering performance (score) | 100 | 141 | 131 | 140 | 143 | 147 |
| Combined performance (total score) | 200 | 335 | 309 | 329 | 331 | 324 |

As shown in Table 3, it is confirmed that various dimensions of the curved surface affect traction performance and cornering performance. In addition, it is confirmed that each Example shown in Table 3 has improved combined performance of traction performance and cornering performance as compared to the comparative example.

The same tests as described above were carried out for Examples in which the protrution shown in FIG. 6 was formed on the tread surface of the crown block 11. In addition, a tire in which the chamfered portion shown in FIG. 8 was added to the crown block in FIG. 6 was tested.

The results of the tests are shown in Table 4.

**[Table 4]**

| | Comparative Example | Example 1 | Example 22 | Example 23 | Example 24 | Example 25 | Example 26 | Example 27 |
|---|---|---|---|---|---|---|---|---|
| Drawing showing tread pattern | FIG. 11 | FIG. 2 | FIG. 2 | FIG. 2 | FIG. 2 | FIG. 2 | FIG. 2 | FIG. 2 |
| Presence/absence of protrusion | Absence | Absence | Presence | Presence | Presence | Presence | Presence | Presence |
| Presence/absence of chamfered portion | Absence | Absence | Absence | Absence | Absence | Absence | Absence | Presence |
| Protrusion height h3 of protrusion / height h1 of block main body (%) | - | - | 15 | 5 | 10 | 20 | 25 | 15 |
| Traction performance (score) | 100 | 194 | 208 | 198 | 207 | 208 | 207 | 208 |
| Cornering performance (score) | 100 | 141 | 152 | 142 | 148 | 152 | 155 | 156 |
| Combined performance (total score) | 200 | 335 | 360 | 340 | 355 | 360 | 362 | 364 |

As shown in Table 4, it is confirmed that the above-described protrution serves to improve traction performance and cornering performance. In addition, it is confirmed that each Example shown in Table 4 has improved combined performance of traction performance and cornering performance as compared to the comparative example. Moreover, it is confirmed that the protrusion and the chamfered portion further enhance traction performance and cornering performance.

The same tests as described above were carried out for Examples in which the chamfered portion shown in FIG. 8 was provided at the tread surface of the crown block 11.

The results of the tests are shown in Table 5.

**[Table 5]**

| | Comparative Example | Example 1 | Example 28 | Example 29 | Example 30 | Example 31 | Example 32 | Example 33 | Example 34 | Example 35 | Example 36 |
|---|---|---|---|---|---|---|---|---|---|---|---|
| Drawing showing tread pattern | FIG. 11 | FIG. 2 | FIG. 2 | FIG. 2 | FIG. 2 | FIG. 2 | FIG. 2 | FIG. 2 | FIG. 2 | FIG. 2 | FIG. 2 |
| Presence/absence of chamfered portion | Absence | Absence | Presence | Presence | Presence | Presence | Presence | Presence | Presence | Presence | Presence |
| Length L13 of chamfered portion / height h1 of block main body (%) | - | - | 20 | 10 | 15 | 25 | 30 | 20 | 20 | 20 | 20 |
| Width W4 of chamfered portion / length L14 of block main body (%) | - | - | 15 | 15 | 15 | 15 | 15 | 5 | 10 | 20 | 25 |
| Traction performance (score) | 100 | 194 | 188 | 190 | 188 | 185 | 181 | 193 | 188 | 187 | 179 |
| Cornering performance (score) | 100 | 141 | 135 | 139 | 136 | 134 | 131 | 142 | 136 | 135 | 127 |
| Combined performance (total score) | 200 | 335 | 323 | 329 | 324 | 319 | 312 | 335 | 324 | 322 | 306 |

As shown in Table 5, it is confirmed that the above-described chamfered portion affects traction performance and cornering performance. In addition, it is confirmed that each Example shown in Table 5 has improved combined performance of tracton performance and cornering performance as compared to the comparative example.

The same tests as described above were carried out for Examples in which the distance between the centroid of the middle block and the centroid of the crown block was changed.

The results of the tests are shown in Table 6.

**[Table 6]**

| | Comparative Example | Example 1 | Example 37 | Example 38 | Example 39 | Example 40 |
|---|---|---|---|---|---|---|
| Drawing showing tread pattern | FIG. 11 | FIG. 2 | FIG. 2 | FIG. 2 | FIG. 2 | FIG. 2 |
| Distance L12 between centroids of crown block and middle block / one pitch length P1 (%) | 20 | 20 | 10 | 15 | 25 | 30 |
| Traction performance (score) | 100 | 194 | 207 | 201 | 184 | 172 |
| Cornering performance (score) | 100 | 141 | 121 | 130 | 147 | 153 |
| Combined performance (total score) | 200 | 335 | 328 | 331 | 331 | 325 |

As shown in Table 6, it is confirmed that the distance between the centroid of the middle block and the centroid of the crown block affects traction performance and cornering performance. In addition, it is confirmed that each Example shown in Table 6 has improved combined performance of traction performance and cornering performance as compared to the comparative example.

## Claims

1. A tire (1) for a motorcycle for running on rough terrain, comprising a tread portion (2) having a designated rotation direction (R) of the tire (1), wherein
the tread portion (2) includes a base surface (8) and a plurality of blocks (10) raised outward in a tire radial direction from the base surface (8),
at least one of the plurality of blocks (10) includes a finned block (15),
the finned block (15) includes a block main body (16) and at least two fin portions (17) having a smaller width in a tire axial direction than the block main body (16) and extending to one side in a tire circumferential direction,
a projection (18) is provided between two fin portions (17) of said at least two fin portions (17) on the base surface (8),
the projection (18) is disposed within a block adjacent region (20) which includes a gap portion (21) between the two fin portions (17) and an extension portion (22) extending from the gap portion (21) toward a heel side in the designated rotation direction (R) so as to be parallel to the tire circumferential direction,
the blocks (10) include a crown block (11) on a tire equator (C) side and a middle block (12) adjacent to the crown block (11) in the tire axial direction, and
**characterized in that**
each of the crown block (11) and the middle block (12) is formed as the finned block (15), wherein the crown block (11) includes three fin portions (17) including a first fin portion (26) on one side in the tire axial direction, a second fin portion (27) on the other side in the tire axial direction, and a third fin portion (28) between the first fin portion (26) and the second fin portion (27), and wherein the middle block (12) includes the two fin portions (17) including a first fin portion (26) on one side in the tire axial direction and a second fin portion (27) on the other side in the tire axial direction,
one projection (18) is disposed in each of the block adjacent region (20) between the first fin portion (26) and the third fin portion (28) and the block adjacent region (20) between the second fin portion (27) and the third fin portion (28) of the crown block (11), and
one projection (18) is disposed in the block adjacent region (20) between the first fin portion (26) and the second fin portion (27) of the middle block (12).

2. The tire (1) for a motorcycle for running on rough terrain according to claim 1, wherein a length (L5) in the tire circumferential direction of the projection (18) is larger than a length (L4) in the tire axial direction of the projection (18).

3. The tire (1) for a motorcycle for running on rough terrain according to claim 1 or 2, wherein a length (L6) in the tire axial direction of the finned block (15) is larger than a length (L1) in the tire circumferential direction of the finned block (15).

4. The tire (1) for a motorcycle for running on rough terrain according to any one of claims 1 to 3, wherein a distance (L2) in the tire circumferential direction from the block main body (16) to the projection (18) is smaller than the length (L1) in the tire circumferential direction of the finned block (15).

5. The tire (1) for a motorcycle for running on rough terrain according to any one of claims 1 to 4, wherein the projection (18) overlaps at least one of the fin portions (17) in the tire circumferential direction.

6. The tire (1) for a motorcycle for running on rough terrain according to any one of claims 1 to 5, wherein the projection (18) is provided so as not to overlap a region obtained by extending each of the two fin portions (17) so as to be parallel to the tire circumferential direction.

7. The tire (1) for a motorcycle for running on rough terrain according to any one of claims 1 to 6, wherein
the finned block (15) includes a first side surface (23) facing another side in the tire circumferential direction, and
the first side surface (23) is connected to the base surface (8) via a curved surface (30).

8. The tire (1) for a motorcycle for running on rough terrain according to claim 7, wherein a maximum height (h2) of the curved surface (30) from the base surface (8) is smaller than a maximum height of each fin portion (17) from the base surface (8).

9. The tire (1) for a motorcycle for running on rough terrain according to any one of claims 1 to 8, wherein a protrusion (35) is provided on a tread surface (15s) of the finned block (15) so as to protrude in a block height direction.

10. The tire (1) for a motorcycle for running on rough terrain according to claim 9, wherein the protrusion (35) is surrounded by a recess (36) that is recessed from the tread surface (15s).

11. The tire (1) for a motorcycle for running on rough terrain according to any one of claims 1 to 10, wherein a chamfered portion (37) is provided at an edge of the tread surface (15s) of the finned block (15).

12. The tire (1) for a motorcycle for running on rough terrain according to claim 11, wherein
the tread portion (2) has a designated rotation direction (R) of the tire (1), and
the chamfered portion (37) is connected to a side surface on a toe side in the rotation direction (R).

13. The tire (1) for a motorcycle for running on rough terrain according to any one of claims 1 to 12, wherein a centroid (12c) of a tread surface of the middle block (12) is located on a toe side in the rotation direction (R) of a centroid (11c) of a tread surface of the crown block (11).

## Patentansprüche

1. Reifen (1) für ein Motorrad zum Fahren in unebenem Gelände, der einen Laufflächenabschnitt (2) mit einer bezeichneten Drehrichtung (R) des Reifens (1) umfasst, wobei
der Laufflächenabschnitt (2) eine Basisfläche (8) und mehrere Blöcke (10) aufweist, die in einer Reifenradialrichtung von der Basisfläche (8) nach außen erhöht sind,
zumindest einer der mehreren Blöcke (10) einen gerippten Block (15) umfasst,
der gerippte Block (15) einen Blockhauptkörper (16) und zumindest zwei Rippenabschnitte (17) umfasst, die in einer Reifenaxialrichtung eine kleinere Breite als der Blockhauptkörper (16) aufweisen und sich in einer Reifenumfangsrichtung zu einer Seite erstrecken,
ein Vorsprung (18) zwischen zwei Rippenabschnitten (17) der zumindest zwei Rippenabschnitte (17) auf der Basisfläche (8) vorgesehen ist,
der Vorsprung (18) innerhalb eines an den Block angrenzenden Bereichs (20) angeordnet ist, der einen Lückenabschnitt (21) zwischen den zwei Rippenabschnitten (17) und einen Erweiterungsabschnitt (22) umfasst, der sich von dem Lückenabschnitt (21) in Richtung einer Fersenseite in der bezeichneten Drehrichtung (R) erstreckt, um dadurch zu der Reifenumfangsrichtung parallel zu sein,
die Blöcke (10) einen Kronenblock (11) auf einer Seite eines Reifenäquators (C) und einen Mittelblock (12) umfassen, der dem Kronenblock (11) in der Reifenaxialrichtung benachbart ist, und
**dadurch gekennzeichnet, dass**
jeder von dem Kronenblock (11) und dem Mittelblock (12) als der gerippte Block (15) ausgebildet ist, wobei der Kronenblock (11) drei Rippenabschnitte (17) aufweist, die einen ersten Rippenabschnitt (26) auf einer Seite in der Reifenaxialrichtung, einen zweiten Rippenabschnitt (27) auf der anderen Seite in der Reifenaxialrichtung und einen dritten Rippenabschnitt (28) zwischen dem ersten Rippenabschnitt (26) und dem zweiten Rippenabschnitt (27) umfassen, und wobei der Mittelblock (12) die zwei Rippenabschnitte (17) aufweist, die einen ersten Rippenabschnitt (26) auf einer Seite in der Reifenaxialrichtung und einen zweiten Rippenabschnitt (27) auf der anderen Seite in der Reifenaxialrichtung umfassen,
ein Vorsprung (18) in jedem von dem an den Block angrenzenden Bereich (20) zwischen dem ersten Rippenabschnitt (26) und dem dritten Rippenabschnitt (28) sowie von dem an den Block angrenzenden Bereich (20) zwischen dem zweiten Rippenabschnitt (27) und dem dritten Rippenabschnitt (28) des Kronenblocks (11) angeordnet ist und
ein Vorsprung (18) in dem an den Block angrenzenden Bereich (20) zwischen dem ersten Rippenabschnitt (26) und dem zweiten Rippenabschnitt (27) des Mittelblocks (12) angeordnet ist.

2. Reifen (1) für ein Motorrad zum Fahren in unebenem Gelände nach Anspruch 1, wobei eine Länge (L5) des Vorsprungs (18) in der Reifenumfangsrichtung größer als eine Länge (L4) des Vorsprungs (18) in der Reifenaxialrichtung ist.

3. Reifen (1) für ein Motorrad zum Fahren in unebenem Gelände nach Anspruch 1 oder 2, wobei eine Länge (L6) des gerippten Blocks (15) in der Reifenaxialrichtung größer als eine Länge (L1) des gerippten Blocks (15) in der Reifenumfangsrichtung ist.

4. Reifen (1) für ein Motorrad zum Fahren in unebenem Gelände nach einem der Ansprüche 1 bis 3, wobei eine Distanz (L2) in der Reifenumfangsrichtung von dem Blockhauptkörper (16) bis zu dem Vorsprung (18) kleiner als die Länge (L1) des gerippten Blocks (15) in der Reifenumfangsrichtung ist.

5. Reifen (1) für ein Motorrad zum Fahren in unebenem Gelände nach einem der Ansprüche 1 bis 4, wobei der Vorsprung (18) zumindest einen der Rippenabschnitte (17) in der Reifenumfangsrichtung überlagert.

6. Reifen (1) für ein Motorrad zum Fahren in unebenem Gelände nach einem der Ansprüche 1 bis 5, wobei der Vorsprung (18) derart vorgesehen ist, dass er einen Bereich nicht überlagert, der dadurch erhalten wird, dass jeder der zwei Rippenabschnitte (17) derart erweitert wird, dass er zu der Reifenumfangsrichtung parallel ist.

7. Reifen (1) für ein Motorrad zum Fahren in unebenem Gelände nach einem der Ansprüche 1 bis 6, wobei
der gerippte Block (15) eine erste Seitenfläche (23) aufweist, die einer anderen Seite in der Reifenumfangsrichtung zugewandt ist, und
die erste Seitenfläche (23) mit der Basisfläche (8) über eine gekrümmte Fläche (30) verbunden ist.

8. Reifen (1) für ein Motorrad zum Fahren in unebenem Gelände nach Anspruch 7, wobei eine maximale Höhe (h2) der gekrümmten Fläche (30) von der Basisfläche (8) kleiner als eine maximale Höhe jedes Rippenabschnitts (17) von der Basisfläche (8) ist.

9. Reifen (1) für ein Motorrad zum Fahren in unebenem Gelände nach einem der Ansprüche 1 bis 8, wobei eine Erhöhung (35) derart auf einer Lauffläche (15s) des gerippten Blocks (15) vorgesehen ist, dass diese in einer Blockhöhenrichtung hervorsteht.

10. Reifen (1) für ein Motorrad zum Fahren in unebenem Gelände nach Anspruch 9, wobei die Erhöhung (35) von einer Aussparung (36) umgeben ist, die von der Lauffläche (15s) zurückversetzt ist.

11. Reifen (1) für ein Motorrad zum Fahren in unebenem Gelände nach einem der Ansprüche 1 bis 10, wobei ein abgeschrägter Abschnitt (37) an einem Rand der Lauffläche (15s) des gerippten Blocks (15) vorgesehen ist.

12. Reifen (1) für ein Motorrad zum Fahren in unebenem Gelände nach Anspruch 11, wobei
der Laufflächenabschnitt (2) eine bezeichnete Drehrichtung (R) des Reifens (1) aufweist und
der abgeschrägte Abschnitt (37) mit einer Seitenfläche auf einer Spitzenseite in der Drehrichtung (R) verbunden ist.

13. Reifen (1) für ein Motorrad zum Fahren in unebenem Gelände nach einem der Ansprüche 1 bis 12, wobei ein Zentrum (12c) einer Lauffläche des Mittelblocks (12) in der Drehrichtung (R) auf einer Spitzenseite eines Zentrums (11c) einer Lauffläche des Kronenblocks (11) angeordnet ist.

## Revendications

1. Pneumatique (1) pour motocyclette destiné à circuler en terrain accidenté, comprenant une portion formant bande de roulement (2) ayant par conception une direction de rotation (R) du pneumatique (1), dans lequel
la portion formant bande de roulement (2) inclut une surface de base (8) et une pluralité de blocs (10) surélevés vers l'extérieur dans une direction radiale du pneumatique par rapport à la surface de base (8),
l'un au moins de la pluralité de blocs (10) inclut un bloc à ailettes (15),
le bloc à ailettes (15) inclut un corps principal de bloc (16) et au moins deux portions formant ailettes (17) ayant une largeur plus petite dans une direction axiale du pneumatique que le corps principal de bloc (16) et s'étendant jusqu'à un côté dans une direction circonférentielle du pneumatique,
une projection (18) est prévue entre deux portions formant ailettes (17) desdites au moins deux portions formant ailettes (17) sur la surface de base (8),
la projection (18) est disposée à l'intérieur d'une région adjacente de bloc (20) qui inclut une portion d'intervalle (21) entre les deux portions formant ailettes (17) et une portion en extension (22) qui s'étent depuis la portion d'intervalle (21) vers un côté talon dans la direction de rotation par conception (R) de manière à être parallèle à la direction circonférentielle du pneumatique,
les blocs (10) incluent un bloc de couronne (11) sur un équateur de pneumatique (C) et un bloc médian (12) adjacent au bloc de couronne (11) dans la direction axiale du pneumatique, et
**caractérisé en ce que**
chacun du bloc de couronne (11) et du bloc médian (12) est formé comme étant le bloc à ailettes (15), dans lequel le bloc de couronne (11) inclut trois portions formant ailettes (17) incluant une première portion formant ailette (26) sur un côté dans la direction axiale du pneumatique, une deuxième portion formant ailette (27) sur l'autre côté dans la direction axiale du pneumatique, et une troisième portion formant ailette (28) entre la première portion formant ailette (26) et la deuxième portion formant ailette (27), et dans lequel le bloc médian (12) inclut les deux portions formant ailettes (17) incluant une première portion formant ailette (26) sur un côté dans la direction axiale du pneumatique et une deuxième portion formant ailette (27) sur l'autre côté dans la direction axiale du pneumatique,
une projection (18) est disposée dans chacune de la région adjacente de bloc (20) entre la première portion formant ailette (26) et la troisième portion formant ailette (28) et de la région adjacente de bloc (20) entre la deuxième portion formant ailette (27) et la troisième portion formant ailette (28) du bloc de couronne (11), et
une projection (18) est disposée dans la région adjacente de bloc (20) entre la première portion formant ailettes (26) et la deuxième portion formant ailette (27) du bloc médian (12).

2. Pneumatique (1) pour motocyclette destiné à circuler en terrain accidenté selon la revendication 1, dans lequel une longueur (L5) dans la direction circonférentielle du pneumatique de la projection (18) est plus grande qu'une longueur (L4) dans la direction axiale du pneumatique de la projection (18).

3. Pneumatique (1) pour motocyclette destiné à circuler en terrain accidenté selon la revendication 1 ou 2, dans lequel une longueur (L6) dans direction axiale du pneumatique du bloc à ailettes (15) est plus grande qu'une longueur (L1) dans la direction circonférentielle du pneumatique du bloc à ailettes (15).

4. Pneumatique (1) pour motocyclette destiné à circuler en terrain accidenté selon l'une quelconque des revendications 1 à 3, dans lequel une distance (L2) dans la direction circonférentielle du pneumatique depuis le corps principal de bloc (16) jusqu'à la projection (18) est plus petite que la longueur (L1) dans la direction circonférentielle du pneumatique du bloc à ailettes (15).

5. Pneumatique (1) pour motocyclette destiné à circuler en terrain accidenté selon l'une quelconque des revendications 1 à 4, dans lequel la projection (18) est en chevauchement avec au moins une des portions formant ailettes (17) dans la direction circonférentielle du pneumatique.

6. Pneumatique (1) pour motocyclette destiné à circuler en terrain accidenté selon l'une quelconque des revendications 1 à 5, dans lequel la projection (18) est prévue de manière à ne pas être en chevauchement avec une région obtenue par extension de chacune des deux portions formant ailettes (17) de manière à être parallèle à la direction circonférentielle du pneumatique.

7. Pneumatique (1) pour motocyclette destiné à circuler en terrain accidenté selon l'une quelconque des revendications 1 à 6, dans lequel
le bloc à ailettes (15) inclut une première surface latérale (23) faisant face à un autre côté dans la direction circonférentielle du pneumatique, et
la première surface latérale (23) est connectée à la surface de base (8) via une surface incurvée (30).

8. Pneumatique (1) pour motocyclette destiné à circuler en terrain accidenté selon la revendication 7, dans lequel une hauteur maximum (h2) de la surface incurvée (30) depuis la surface de base (8) est plus petite qu'une hauteur maximum de chaque portion formant ailettes (17) depuis la surface de base (8).

9. Pneumatique (1) pour motocyclette destiné à circuler en terrain accidenté selon l'une quelconque des revendications 1 à 8, dans lequel une projection (35) est prévue sur une surface de bande de roulement (15s) du bloc à ailettes (15) de manière à se projeter dans une direction de la hauteur de bloc.

10. Pneumatique (1) pour motocyclette destiné à circuler en terrain accidenté selon la revendication 9, dans lequel la projection (35) est entourée par un évidement (36) qui est évidé par rapport à la surface de bande de roulement (15s).

11. Pneumatique (1) pour motocyclette destiné à circuler en terrain accidenté selon l'une quelconque des revendications 1 à 10, dans lequel une portion chanfreinée (37) est prévue au niveau d'un bord de la surface de bande de roulement (15s) du bloc à ailettes (15).

12. Pneumatique (1) pour motocyclette destiné à circuler en terrain accidenté selon la revendication 11, dans lequel
la portion formant bande de roulement (2) a une direction de rotation par conception (R) du pneumatique (1), et
la portion chanfreinée (37) est connectée à une surface latérale sur un côté pointe dans la direction de rotation (R).

13. Pneumatique (1) pour motocyclette destiné à circuler en terrain accidenté selon l'une quelconque des revendications 1 à 12, dans lequel un barycentre (12c) d'une surface de bande de roulement du bloc médian (12) est situé sur un côté pointe dans la direction de rotation (R) d'un barycentre (11c) d'une surface de bande de roulement du bloc de couronne (11).
